# EUROPÄISCHE PATENTSCHRIFT

(11) **EP 0 619 274 B1**
(45) Veröffentlichungstag und Bekanntmachung des Hinweises auf die Patenterteilung: **18.09.1996**
(21) Anmeldenummer: 94105188.0
(22) Anmeldetag: 31.03.1994
(51) Int. Cl.: C03C 3/087, C03C 4/02

(54) **Bronzefarbenes oder graufarbenes Kalknatron-Silikatglas**
Bronze or grey coloured soda lime silicate glass
Verre de silicate-soudre-calcique coloré bronze ou gris

(30) Priorität: 06.04.1993 DE 4311180
(43) Veröffentlichungstag der Anmeldung: 12.10.1994
(73) Patentinhaber: PILKINGTON PLC, St. Helens, Merseyside WA10 3TT (GB); FLACHGLAS AKTIENGESELLSCHAFT, 90766 Fürth (DE)
(72) Erfinder: Stötzel, Eberhard, Dr. rer. nat. Dipl.-Chem., D-46514 Schermbeck (DE); Klösel, Ferdinand, Dipl.-Ing., D-46286 Dorsten (DE); Yale, Brian, Ormskirk, Lancashire L39 4SP (GB)
(74) Vertreter: Goddar, Heinz J., Dr.

(56) Entgegenhaltungen:
- EP-A- 0 490 494
- EP-A- 0 530 459
- CHEMICAL ABSTRACTS, vol. 95, no. 24, 14. Dezember 1981, Columbus, Ohio, US; abstract no. 208344j, Seite 285 & SU-A-833 591
- DATABASE WPI Section Ch, Week 8841, Derwent Publications Ltd., London, GB; Class L, AN 88-291154 & SU-A-1 384 548

## Beschreibung

Die Erfindung betrifft ein bronzefarbenes oder graufarbenes Kalknatron-Silikatglas, insbesondere für die Herstellung von Flachgläsern nach dem Gußverfahren oder nach dem Floatverfahren, mit einer Basis-Zusammensetzung wie in Patentanspruch 1 angegeben.

Bei den heute hergestellten Flachgläsern mit Bronzefärbung oder Graufärbung, die für Bauten und auch für Fahrzeuge verwendet werden, erfolgt die Einstellung der Farbe in der Regel durch Zugabe von geringen Selen- und Kobalt-Anteilen in der Größenordnung von 10 bis 50 ppm Selen und 30 bis 40 ppm Kobalt zu einer üblichen Kalknatron-Silikatglas-Basis-Zusammensetzung. Kalknatron-Silikatgläser sind, abhängig von ihrem Gehalt an Fe₂O₃, gelb- bzw. grünstichig. Durch die Zugabe von Selen und Kobalt erfolgt eine Verschiebung des Farbortes im Farbdreieck auf die Bronzewerte mit dominierenden Wellenlängen von 580 nm bis 610 nm bis zu der gewünschten Farbreinheit. Ein marktübliches Bronzeglas (Kalknatron-Silikatglas), dessen Farbgebung auf Selen- und Kobalt-Anteilen beruht, hat folgende Zusammensetzung:

| | |
|---|---|
| SiO₂: | 70,09 Gew.-% |
| Al₂O₃: | 1,39 Gew.-% |
| TiO₂: | 0,06 Gew.-% |
| CaO: | 8,09 Gew.-% |
| MgO: | 5,01 Gew.-% |
| Na₂O: | 14,11 Gew.-% |
| K₂O: | 0,65 Gew.-% |
| BaO: | 0,02 Gew.-% |
| SO₃: | 0,22 Gew.-%, |

wobei an farbgebenden Zusätzen mit

| | |
|---|---|
| Fe₂O₃: | 0,35 Gew.-% |
| CoO: | 0,004 Gew.-% und |
| Se: | 0,005 Gew.-% |

gearbeitet wird.

Dieses bekannte Bronzeglas hat bei einer Dicke von 4 mm ein Transmissionsvermögen bei den Normlichtarten A und D65 (DIN 5033) von 55,8% bzw. 53.9%, bei Gesamtsonnenstrahlung (TE-CIE) von 57,8%. Die Transmissionswerte für UV-Licht betragen für den UVA-Anteil 16,6%, für den UVB-Anteil 0,0% und für die UV-Gesamtstrahlung 15,8%.

Die Farbkoordinaten (unbunt, definiert in der DIN 5033) sind mit X = 56,4, Y = 54,3, Z = 45,3, bzw. x = 0,3616, y = 0,3482, z = 0,2901 angegeben, weiter wurden L* = 78,7, a* = 5,2, b* = 9,6 bestimmt; die Farbreinheit liegt bei 13,0.

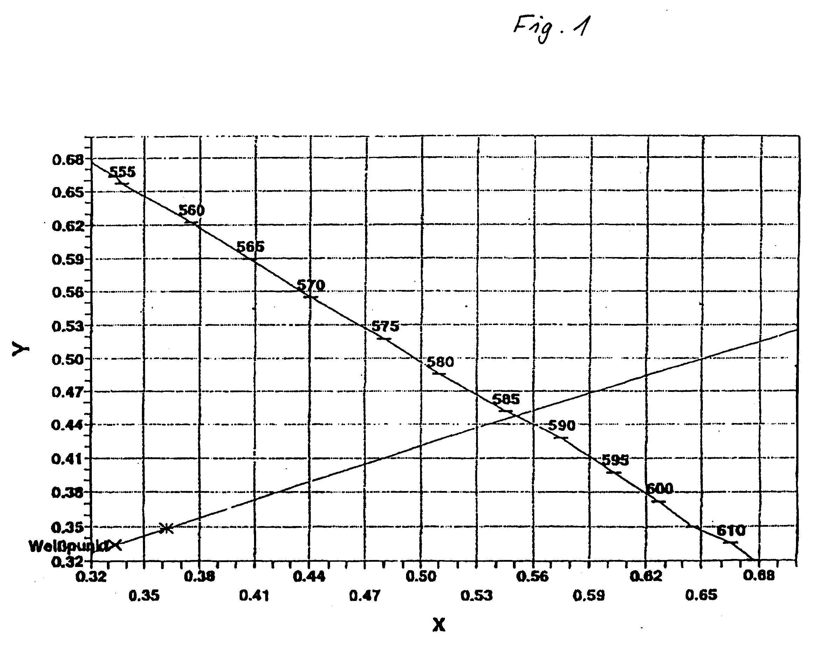

Die Koordinaten x und y legen die Lage des Farbortes im Farbdreieck fest, das für das oben beschriebene Glas in Figur 1 dargestellt ist. Der Farbort ist mit "*" gekennzeichnet, der Weißpunkt mit "x". Als die den Buntton gebende dominierende Wellenlänge wurde 585,9 nm ermittelt.

(Die Grenzen für die Farbe liegen beim Bronzeton in den Bereichen x = 0,3333 bis 0,3800 und y = 0,3333 bis 0,3800, beim Grauton in den Bereichen x = 0,3100 bis 0,3600 und y = 0,3100 bis 0,3600.)

Die Verwendung von Selen ist aus vielerlei Gründen nicht unproblematisch. Bei den in Glasschmelzen üblichen Temperaturen verflüchtigt es sich in Anteilen bis zu 90 Gew.-%.

Aufgrund der Toxizität des Selens hat der Gesetzgeber die Einhaltung von maximal zulässigen Ausstoßmengen vorgeschrieben. Derzeit darf der Selen-Ausstoß in der Bundesrepublik Deutschland 1 mg/m³ Abgas nicht überschreiten. Im Abgassystem des Schmelzofens müssen somit leistungsfähige Filteranlagen vorgesehen sein.

Aus diesen Gründen werden seit langem Zusammensetzungen für selenfreies Bronze- oder Grauglas auf ihre Einsetzbarkeit in Produktionsanlagen für Flachgläser untersucht. Diese enthalten als hauptsächlich farbgebende Substanz ein Manganoxid.

Für die Farbentwicklung sind dabei sowohl die Basisglaszusammensetzung als auch die Führung des Abkühlprozesses von Bedeutung. Für die Erfindung sollen nur Kalknatron-Silikatgläser betrachtet werden, die vorzugsweise im Guß- oder Floatverfahren unter den üblichen Bedingungen zu Flachgläsern verarbeitet werden.

Aus der JP-A 52-47 812 ist ein farbloses Glas bekannt, das alternativ zu Selen auch Mangan in Form von MnO₂ enthalten kann. Der Gehalt an MnO₂ soll dabei 0,08% nicht überschreiten.

In der GB-A 708,031 wird der wechselseitige Einfluß farbgebender Zusätze auf die Tönung eines Kalknatron-Silikatglases diskutiert. Dabei werden 0,2 bis 1,2 Gew.-% Vanadiumpentoxid (V₂O₅), um die Ultraviolettabsorption herbeizuführen, 0 bis etwa 0,45 Gew.-% MnO₂ und Spuren an Eisen (bis zu 0,1 Gew.-%), Kobalt, Chrom oder Kupfer eingesetzt, um ein rosafarbenes Glas zu erhalten. Die Anteile an V₂O₅ und MnO₂ müssen dabei aufeinander abgestimmt sein, da sie sich für die Farbgebung beeinflussen.

In Schmidt/Voss "Die Rohstoffe zur Glaserzeugung", 2. Auflage (1958) ist auf Seite 287 eine Rezeptur für Grauglas (Rauchglas) mit 4 Gew.-% Mn₂O₃, 2 Gew.-% Fe₂O₃, 1 Gew.-% NiO und 1 Gew.-% CuO angegeben. Eine Komposition dieser Art läßt sich aus technologischen Gründen nicht für die Flachglas-Herstellung verwenden.

Aus der US-A 4,116,704 ist ein grau-braunes Glas zur Herstellung von Kochgefäßen bekannt, bei dem als farbgebende Zusätze 0,001 bis 0,116 Gew.-% CoO, 0,037 bis 0,0055 Gew.-% NiO und 0,6 bis 0,21 Gew.-% MnO₂ vorliegen. Allerdings handelt es sich bei dem Basisglas um ein Borosilikatglas.

Die JP-A 81-41 579 offenbart ein infrarotabsorbierendes Grauglas mit 0,1 bis 0,2 Gew.-% Fe₂O₃, 0,001 bis 0,004 Gew.-% CoO, 0,02 bis 0,06 Gew.-% NiO und 0,01 bis 0,5 Gew.-% MnO in einem Kalknatron-Silikatglas mit einem stark erhöhten Anteil an K₂O, der im Bereich von 2,5 bis 11,25 Gew.-% liegen kann.

Für die Anwendung bei Kalknatron-Silikatgläsern der eingangs genannten Gattung lassen sich die angegebenen Rezepturen nicht nutzen. Eine Verschiebung des K₂O-Gehaltes auf Werte wie nach der JP-A 81-41 579, dort vermutlich zur Erhöhung des Brechungsindex, oder auch nach der GB-A 708,031 ist nicht ohne unerwünschte Folgen auf die Glaseigenschaften möglich. Bei Flachgläsern läßt der Läuterprozeß zudem nur einen engen Spielraum für den Oxidations-/Reduktionszustand des Glases. Auch kann der Kühlprozeß nicht als freier Parameter zur Farbeinstellung ausgenutzt werden.

Eine burgundfarbene Glaskeramik, bei der die Rottönung durch den Zusatz von Manganoxid erreicht wird und in der Fe₂O₃- und NiO-Verunreinigungen vorliegen, ist in der EP-A 0 530 459 offenbart.

Die EP-A 0 490 494 beschreibt Zusammensetzungen für blaufarbene Gläser mit relativ hohem Anteil an Fe₂O₃.

Es ist die Aufgabe der Erfindung, ein bronzefarbenes oder graufarbenes Kalknatron-Silikatglas bereitzustellen, bei dem auf den Einsatz von Selen als färbender Komponente völlig verzichtet wird, bei dem jedoch mit preiswerten Farbzusätzen gearbeitet wird, wobei es in einer für Kalknatron-Silikatgläser üblichen Produktionsanlage herstellbar sein soll und hinsichtlich seiner optischen Eigenschaften den marktüblichen selenhaltigen Bronzegläsern oder Graugläsern entspricht.

Diese Aufgabe wird mit einem Kalknatron-Silikatglas mit den Merkmalen nach Patentanspruch 1 gelöst. Vorteilhafte Ausgestaltungen sind Gegenstand der Unteransprüche.

Erfindungsgemäß ist vorgesehen, daß farbgebende Zusätze in folgenden Anteilen vorliegen:

| | |
|---|---|
| Fe₂O₃: | 0,14 - 0,45 Gew.-% |
| MnO₂: | 0,5 - 2 Gew.-% |
| NiO: | 0,0 - 0,05 Gew.-% |
| V₂O₅: | 0,0 - 0,5 Gew.-% |
| NiO: | 0,0 - 0,05 Gew.-% |
| CuO: | 0,0 - 0,1 Gew.-% |
| CoO: | 0,0 - 0,008 Gew.-%, |

wobei die Summe der Gewichtsprozente der das Kalknatron-Silikatglas bildenden Bestandteile 100 ist. Die Erhöhung des Mangangehaltes über die für bronze- bzw. graufarbene Gläser üblichen hinaus gestattet es, die Farbgebung auch unter den Redox-Bedingungen der üblichen Sulfatläuterung in einer Flachglasschmelze zu erreichen. Auch bei starker Oxidation der Schmelze durch Nitratzusatz erwies sich der hohe Manganzusatz als notwendig, da nach der Läuterung nur ein geringer Anteil des Mangans farbwirksam ist. Bevorzugt liegt der zuzusetzende Anteil an MnO₂ zwischen 1,0 und 1,7 Gew.-%.

Es hat sich als vorteilhaft herausgestellt, den Anteil an Fe₂O₃ im Bereich von 0,14 bis 0,25 Gew.-% vorzusehen.

Im folgenden soll die Erfindung anhand von Beispielen und den beigefügten Zeichnungen näher erläutert werden. Es zeigt:
- Figur 1: die Lage des Farbortes im Farbdreieck unbunt für marktübliches Selen-Bronze-Gußglas der Dicke 4 mm;
- Figur 2: die Lage des Farbortes im Farbdreieck unbunt für ein Kalknatron-Silikatglas der Dicke 4 mm nach Beispiel 1;
- Figur 3: die Lage des Farbortes im Farbdreieck unbunt für ein Kalknatron-Silikatglas der Dicke 4 mm nach Beispiel 2;
- Figur 4: die Lage des Farbortes im Farbdreieck unbunt für ein Kalknatron-Silikatglas der Dicke 4 mm nach Beispiel 3;
- Figur 5: die Lage des Farbortes im Farbdreieck unbunt für ein Kalknatron-Silikatglas der Dicke 4 mm nach Beispiel 4;
- Figur 6: die Lage des Farbortes im Farbdreieck unbunt für ein Kalknatron-Silikatglas der Dicke 4 mm nach Beispiel 5; und

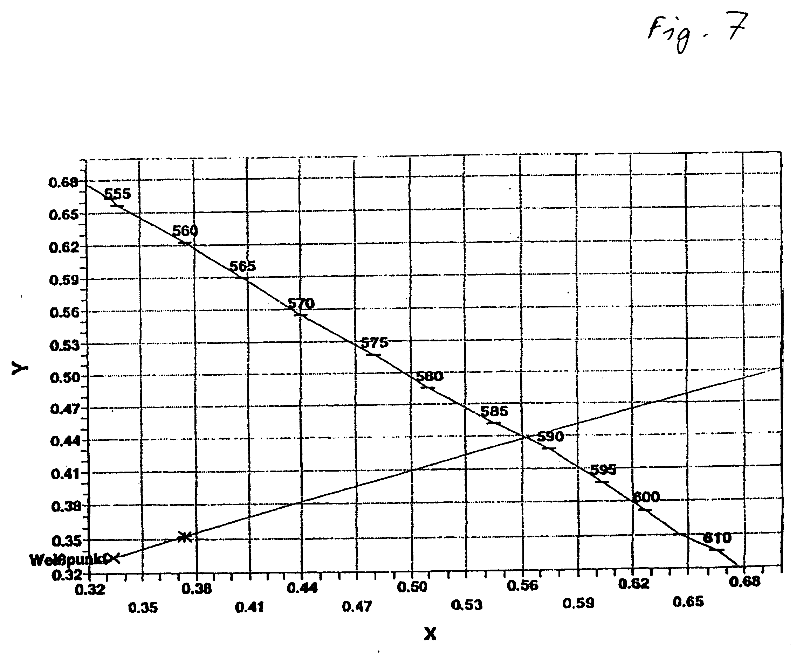

- Figur 7: die Lage des Farbortes im Farbdreieck unbunt für ein Kalknatron-Silikatglas der Dicke 4 mm nach Beispiel 6.

### Beispiel 1 (Bronzefarbenes Kalknatron-Silikatflachglas, hergestellt nach dem Gußverfahren oder dem Floatverfahren)

Ein Kalknatron-Silikatglas, dessen Basis-Zusammensetzung die Anteile

| | |
|---|---|
| SiO₂: | 71,91 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |

aufweist, wird an farbgebenden Zusätzen mit

| | |
|---|---|
| Fe₂O₃: | 0,14 Gew.-% |
| MnO₂: | 1,20 Gew.-% |
| NiO: | 0,04 Gew.-% |
| CoO: | 0,002 Gew.-% |

versehen. Durch den Einsatz von 0,14 Gew.-% Fe₂O₃ und einem gegenüber bekannten Glaszusammensetzungen stark erhöhten MnO₂-Anteil von 1,20 Gew.-% sowie Nickel als farbgebenden Zusätzen wird auch unter den engen Redoxbedingungen der üblichen Sulfatläuterung einer Schmelze zur Herstellung von Flachgläsern ein Verhältnis Mn²⁺/Mn³⁺ von 92/8 erzielt, bei dem ein für den gewünschten Bronzeton des Glases ausreichender Anteil an färbendem Mn³⁺ gleichmäßig im Glas vorhanden ist.

Dieses Bronzeglas hat bei einer Dicke von 4 mm ein Transmissionsvermögen bei den Normlichtarten A und D65 von 53,3% bzw. 51,2%, bei Gesamtsonnenstrahlung (TE-CIE) von 67,3%. Die Transmissionswerte für UV-Licht betragen für den UVA-Anteil 38,6%, für den UVB-Anteil 0,0% und für die UV-Gesamtstrahlung 36,8%.

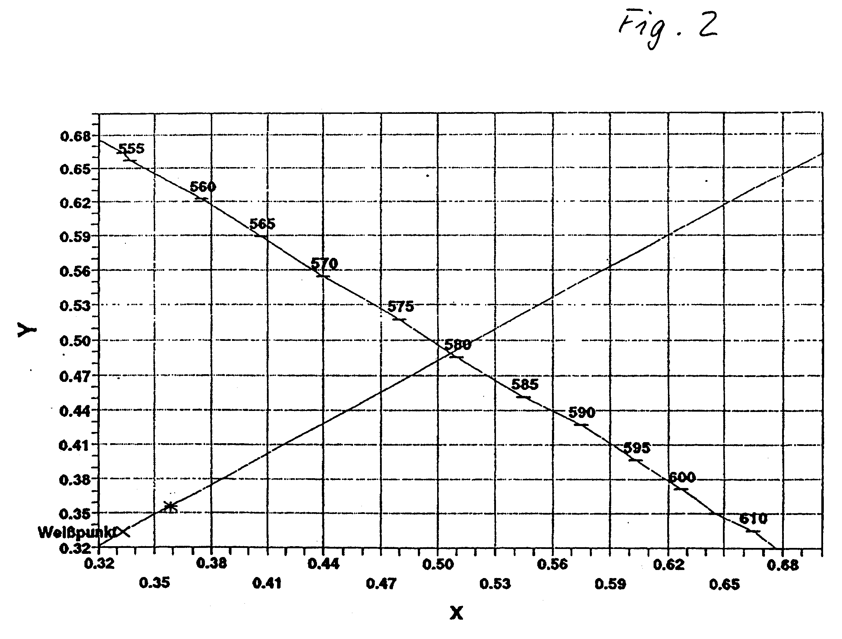

Die Farbkoordinaten (unbunt) sind mit X = 53,5, Y = 51,7, Z = 40,0 bzw. x = 0,3587, y = 0,3561, z = 0,2752 festgestellt, weiter wurden L* = 77,1, a* = 4,7, b* = 13,2 bestimmt; die Farbreinheit liegt bei 17,6. Die Lage des Farbortes im Farbdreieck ist für das oben beschriebene Glas in Figur 2 dargestellt. Der Farbort ist mit "*" gekennzeichnet, der Weißpunkt mit "x". Als die den Buntton gebende dominierende Wellenlänge wurde 579,5 nm ermittelt.

### Beispiel 2 (Bronzefarbenes Kalknatron-Silikatflachglas, hergestellt nach dem Gußverfahren oder dem Floatverfahren)

Ein Kalknatron-Silikatglas, dessen Basis-Zusammensetzung die Anteile

| | |
|---|---|
| SiO₂: | 71,86 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |

aufweist wird an farbgebenden Zusätzen mit

| | |
|---|---|
| Fe₂O₃: | 0,14 Gew.-% |
| MnO₂: | 1,22 Gew.-% |
| NiO: | 0,04 Gew.-% |
| CuO: | 0,04 Gew.-% |

versehen.

Dieses Bronzeglas hat bei einer Dicke von 4 mm ein Transmissionsvermögen bei den Normlichtarten A und D65 von 56,9% bzw. 55,2%, bei Gesamtsonnenstrahlung (TE-CIE) von 65,4%. Die Transmissionswerte für UV-Licht betragen für den UVA-Anteil 35,8%, für den UVB-Anteil 0,0% und für die UV-Gesamtstrahlung 34,1%.

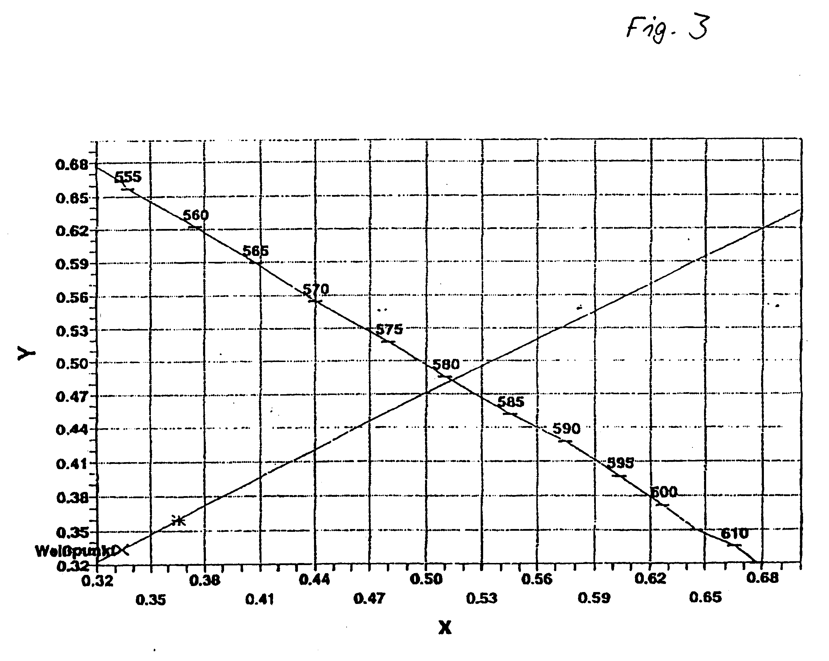

Die Farbkoordinaten (unbunt) sind mit X = 56,4, Y = 55,6, Z = 42,4 bzw. x = 0,3656, y = 0,3600, z = 0,2744 festgestellt, weiter wurden L* = 79,4, a* = 2,1, b* = 14,2 bestimmt; die Farbreinheit liegt bei 17,9. Die Lage des Farbortes im Farbdreieck ist für das oben beschriebene Glas in Figur 3 dargestellt. Der Farbort ist mit "*" gekennzeichnet, der Weißpunkt mit "x". Als dominierende Wellenlänge wurde 580,5 nm ermittelt. Die Farbkoordinaten unbunt, die für einen Bronzefarbton erwünscht sind, werden mit dieser Zusammensetzung praktisch erreicht.

### Beispiel 3 (Graufarbenes Kalknatron-Silikatflachglas mit erhöhter UV-Absorption, hergestellt nach dem Gußverfahren oder dem Floatverfahren)

Ein Kalknatron-Silikatglas, dessen Basis-Zusammensetzung die Anteile

| | |
|---|---|
| SiO₂: | 72,26 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |

aufweist wird an farbgebenden Zusätzen mit

| | |
|---|---|
| Fe₂O₃: | 0,17 Gew.-% |
| V₂O₅: | 0,2 Gew.-% |
| MnO₂: | 0,66 Gew.-% |
| CoO: | 0,0045 Gew.-% |

versehen. Dieses Glas hat zusätzlich UV-absorbierende Eigenschaften. Es zeigt bei einer Dicke von 4 mm ein Transmissionsvermögen bei den Normlichtarten A und D65 von 58,3% bzw. 58,1%, bei Gesamtsonnenstrahlung (TE-CIE) von 59,3%. Die Transmissionswerte für UV-Licht betragen für den UVA-Anteil 4,0%, für den UVB-Anteil 0,0% und für die UV-Gesamtstrahlung 3,8%.

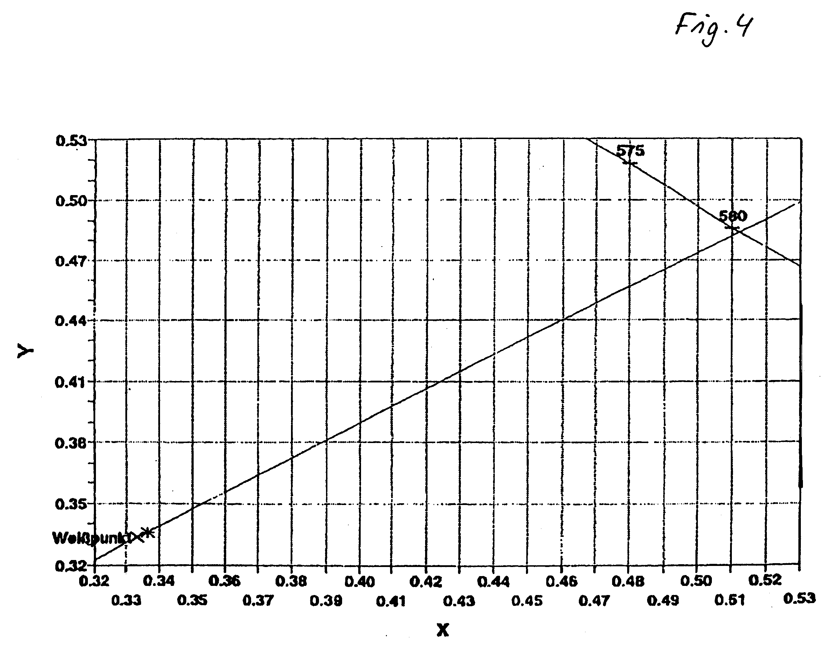

Die Farbkoordinaten (unbunt) sind mit X = 58,2, Y = 58,1, Z = 56,6 bzw. x = 0,3365, y = 0,3360, z = 0,3275 festgestellt, weiter wurden L* = 80,8, a* = 0,2, b* = 1,4 bestimmt; die Farbreinheit liegt bei 1,8. Die Lage des Farbortes im Farbdreieck ist für das oben beschriebene Glas in Figur 4 dargestellt. Der Farbort ist mit "*" gekennzeichnet, der Weißpunkt mit "x". Als dominierende Wellenlänge wurde 580,5 nm ermittelt.

### Beispiel 4 (Bronzefarbenes Kalknatron-Silikatflachglas mit erhöhter UV-Absorption, hergestellt nach dem Gußverfahren oder dem Floatverfahren)

Ein Kalknatron-Silikatglas, dessen Basis-Zusammensetzung die Anteile

| | |
|---|---|
| SiO₂: | 72,21 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |

aufweist wird an farbgebenden Zusätzen mit

| | |
|---|---|
| Fe₂O₃: | 0,17 Gew.-% |
| V₂O₅: | 0,2 Gew.-% |
| MnO₂: | 0,71 Gew.-% |
| CoO: | 0,0035 Gew.-% |

versehen. Dieses Glas hat ebenfalls zusätzlich UV-absorbierende Eigenschaften. Es zeigt bei einer Dicke von 4 mm ein Transmissionsvermögen bei den Normlichtarten A und D65 von 52,3% bzw. 51,4%, bei Gesamtsonnenstrahlung (TE-CIE) von 60,6%. Die Transmissionswerte für UV-Licht betragen für den UVA-Anteil 3,6%, für den UVB-Anteil 0,0% und für die UV-Gesamtstrahlung 3,5%.

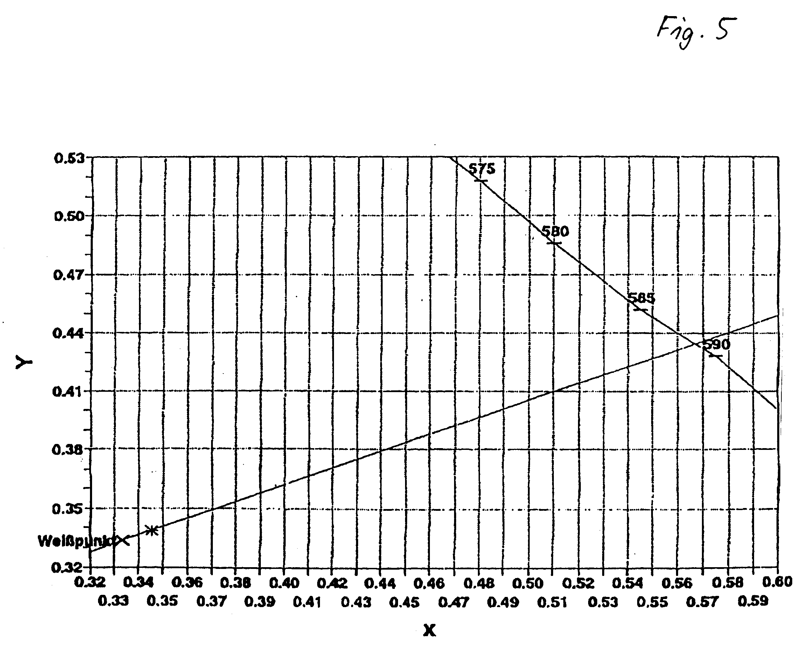

Die Farbkoordinaten (unbunt) sind mit X = 52,7, Y = 51,6, Z = 48,2 bzw. x = 0,3455, y = 0,3386, z = 0,3160 festgestellt, weiter wurden L* = 77,1, a* = 2,7, b* = 3,7 bestimmt; die Farbreinheit liegt bei 3,2. Die Lage des Farbortes im Farbdreieck ist für das oben beschriebene Glas in Figur 5 dargestellt. Der Farbort ist mit "*" gekennzeichnet, der Weißpunkt mit "x". Als dominierende Wellenlänge wurde 588,7 nm ermittelt.

### Beispiel 5 (Bronzefarbenes Kalknatron-Silikatflachglas, hergestellt nach dem Gußverfahren)

Ein Kalknatron-Silikatglas, dessen Basis-Zusammensetzung die Anteile

| | |
|---|---|
| SiO₂: | 68,66 Gew.-% |
| Al₂O₃: | 1,39 Gew.-% |
| TiO₂: | 0,06 Gew.-% |
| CaO: | 8,09 Gew.-% |
| MgO: | 5,01 Gew.-% |
| Na₂O: | 14,11 Gew.-% |
| K₂O: | 0,65 Gew.-% |
| BaO: | 0,02 Gew.-% |
| SO₃: | 0,22 Gew.-% |

aufweist, wird an farbgebenden Zusätzen mit

| | |
|---|---|
| Fe₂O₃: | 0,23 Gew.-% |
| MnO₂: | 1,52 Gew.-% |
| NiO: | 0,033 Gew.-% |
| CoO: | 0,0022 Gew.-% |

versehen.

Dieses Bronzeglas hat bei einer Dicke von 4 mm ein Transmissionsvermögen bei den Normlichtarten A und D65 von 55,4% bzw. 53,4%, bei Gesamtsonnenstrahlung (TE-CIE) von 67,7%. Die Transmissionswerte für UV-Licht betragen für den UVA-Anteil 24,4%, für den UVB-Anteil 0,0% und für die UV-Gesamtstrahlung 23,3%.

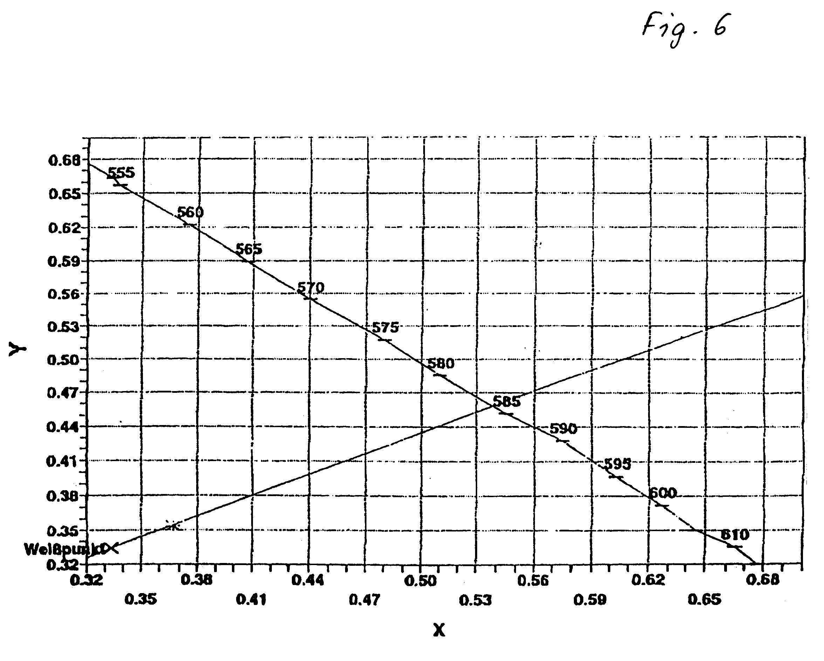

Die Farbkoordinaten (unbunt) sind mit X = 55,8, Y = 53,9, Z = 42,5 bzw. x = 0,3668, y = 0,3538, z = 0,2794 festgestellt, weiter wurden L* = 78,4, a* = 4,9, b* = 12,3 bestimmt; die Farbreinheit liegt bei 16,3. Die Lage des Farbortes im Farbdreieck ist für das oben beschriebene Glas in Figur 6 dargestellt. Der Farbort ist mit "*" gekennzeichnet, der Weißpunkt mit "x". Als dominierende Wellenlänge wurde 584,1 nm ermittelt.

### Beispiel 6 (Bronzefarbenes Kalknatron-Silikatflachglas, hergestellt nach dem Gußverfahren)

Ein Kalknatron-Silikatglas, dessen Basis-Zusammensetzung die Anteile

| | |
|---|---|
| SiO₂: | 68,58 Gew.-% |
| Al₂O₃: | 1,39 Gew.-% |
| TiO₂: | 0,06 Gew.-% |
| CaO: | 8,09 Gew.-% |
| MgO: | 5,01 Gew.-% |
| Na₂O: | 14,11 Gew.-% |
| K₂O: | 0,65 Gew.-% |
| BaO: | 0,02 Gew.-% |
| SO₃: | 0,22 Gew.-% |

aufweist, wird an farbgebenden Zusätzen mit

| | |
|---|---|
| Fe₂O₃: | 0,23 Gew.-% |
| MnO₂: | 1,61 Gew.-% |
| NiO: | 0,027 Gew.-% |
| CoO: | 0,0014 Gew.-% |

versehen.

Dieses Bronzeglas hat bei einer Dicke von 4 mm ein Transmissionsvermögen bei den Normlichtarten A und D65 von 51,1% bzw. 48,6%, bei Gesamtsonnenstrahlung (TE-CIE) von 66,7%. Die Transmissionswerte für UV-Licht betragen für den UVA-Anteil 24,3%, für den UVB-Anteil 0,0% und für die UV-Gesamtstrahlung 23,2%.

Die Farbkoordinaten (unbunt) sind mit X = 52,3, Y = 49,2, Z = 38,4 bzw. x = 0,3736, y = 0,3518, z = 0,2746 festgestellt, weiter wurden L* = 75,6, a* = 8,0, b* = 12,5 bestimmt; die Farbreinheit liegt bei 17,6. Die Lage des Farbortes im Farbdreieck ist für das oben beschriebene Glas in Figur 3 dargestellt. Der Farbort ist mit "*" gekennzeichnet, der Weißpunkt mit "x". Als dominierende Wellenlänge wurde 587,9 nm ermittelt.

## Patentansprüche

1. Bronzefarbenes oder graufarbenes Kalknatron-Silikatglas, insbesondere für die Herstellung von Flachgläsern nach dem Gußverfahren oder nach dem Floatverfahren, mit einer Basis-Zusammensetzung für das Kalknatron-Silikatglas aus
| | |
|---|---|
| SiO₂: | 66 - 74 Gew.-% |
| Al₂O₃: | 0 - 3 Gew.-% |
| TiO₂: | 0 - 0,15 Gew.-% |
| CaO: | 7 - 12 Gew.-% |
| MgO: | 2 - 6 Gew.-% |
| Na₂O: | 10 - 15 Gew.-% |
| K₂O: | 0 - 3 Gew.-% |
| BaO: | 0 - 0,04 Gew.-% |
| SO₃: | 0,1 - 0,4 Gew.-%, |
und den farbgebenden Zusätzen:
| | |
|---|---|
| Fe₂O₃: | 0,14 - 0,45 Gew.-% |
| MnO₂: | 0,5 - 2 Gew.-% |
| NiO: | 0,0 - 0,05 Gew.-% |
| V₂O₅: | 0,0 - 0,5 Gew.-% |
| CuO: | 0,0 - 0,1 Gew.-% |
| CoO: | 0,0 - 0,008 Gew.-%, |
wobei die Summe der Gewichtsprozente der das Kalknatron-Silikatglas bildenden Bestandteile 100 ist.

2. Kalknatron-Silikatglas nach Anspruch 1, dadurch gekennzeichnet, daß der Anteil an Fe₂O₃ im Bereich von 0,14 bis 0,25 Gew.-% liegt.

3. Kalknatron-Silikatglas nach Anspruch 1 oder 2, dadurch gekennzeichnet, daß der Anteil an MnO₂ im Bereich von 1,0 bis 1,7 Gew.-% liegt.

4. Kalknatron-Silikatglas nach einem der Ansprüche 1 bis 3, dadurch gekennzeichnet, daß die Basis-Zusammensetzung die Anteile
| | |
|---|---|
| SiO₂: | 71,91 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |
aufweist und an farbgebenden Zusätzen
| | |
|---|---|
| Fe₂O₃: | 0,14 Gew.-% |
| MnO₂: | 1,20 Gew.-% |
| NiO: | 0,04 Gew.-% |
| CoO: | 0,002 Gew.-% |
vorgesehen sind.

5. Kalknatron-Silikatglas nach einem der Ansprüche 1 bis 3, dadurch gekennzeichnet, daß die Basis-Zusammensetzung die Anteile
| | |
|---|---|
| SiO₂: | 71,86 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |
aufweist und an farbgebenden Zusätzen
| | |
|---|---|
| Fe₂O₃: | 0,14 Gew.-% |
| MnO₂: | 1,22 Gew.-% |
| NiO: | 0,04 Gew.-% |
| CuO: | 0,04 Gew.-% |
vorgesehen sind.

6. Kalknatron-Silikatglas nach einem der Ansprüche 1 bis 3, dadurch gekennzeichnet, daß die Basis-Zusammensetzung die Anteile
| | |
|---|---|
| SiO₂: | 72,26 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |
aufweist und an farbgebenden Zusätzen
| | |
|---|---|
| Fe₂O₃: | 0,17 Gew.-% |
| V₂O₅: | 0,2 Gew.-% |
| MnO₂: | 0,66 Gew.-% |
| CoO: | 0,0045 Gew.-% |
vorgesehen sind.

7. Kalknatron-Silikatglas nach einem der Ansprüche 1 bis 3, dadurch gekennzeichnet, daß die Basis-Zusammensetzung die Anteile
| | |
|---|---|
| SiO₂: | 72,21 Gew.-% |
| Al₂O₃: | 0,64 Gew.-% |
| TiO₂: | 0,04 Gew.-% |
| CaO: | 8,51 Gew.-% |
| MgO: | 3,82 Gew.-% |
| Na₂O: | 13,29 Gew.-% |
| K₂O: | 0,18 Gew.-% |
| BaO: | 0,01 Gew.-% |
| SO₃: | 0,21 Gew.-% |
aufweist und an farbgebenden Zusätzen
| | |
|---|---|
| Fe₂O₃: | 0,17 Gew.-% |
| V₂O₅: | 0,2 Gew.-% |
| MnO₂: | 0,71 Gew.-% |
| CoO: | 0,0035 Gew.-% |
vorgesehen sind.

8. Kalknatron-Silikatglas nach einem der Ansprüche 1 bis 3, dadurch gekennzeichnet, daß die Basis-Zusammensetzung die Anteile
| | |
|---|---|
| SiO₂: | 68,66 Gew.-% |
| Al₂O₃: | 1,39 Gew.-% |
| TiO₂: | 0,06 Gew.-% |
| CaO: | 8,09 Gew.-% |
| MgO: | 5,01 Gew.-% |
| Na₂O: | 14,11 Gew.-% |
| K₂O: | 0,65 Gew.-% |
| BaO: | 0,02 Gew.-% |
| SO₃: | 0,22 Gew.-% |
aufweist und an farbgebenden Zusätzen
| | |
|---|---|
| Fe₂O₃: | 0,23 Gew.-% |
| MnO₂: | 1,52 Gew.-% |
| NiO: | 0,033 Gew.-% |
| CoO: | 0,0022 Gew.-% |
vorgesehen sind.

9. Kalknatron-Silikatglas nach einem der Ansprüche 1 bis 3, dadurch gekennzeichnet, daß die Basis-Zusammensetzung die Anteile
| | |
|---|---|
| SiO₂: | 68,58 Gew.-% |
| Al₂O₃: | 1,39 Gew.-% |
| TiO₂: | 0,06 Gew.-% |
| CaO: | 8,09 Gew.-% |
| MgO: | 5,01 Gew.-% |
| Na₂O: | 14,11 Gew.-% |
| K₂O: | 0,65 Gew.-% |
| BaO: | 0,02 Gew.-% |
| SO₃: | 0,22 Gew.-% |
aufweist und an farbgebenden Zusätzen
| | |
|---|---|
| Fe₂O₃: | 0,23 Gew.-% |
| MnO₂: | 1,61 Gew.-% |
| NiO: | 0,027 Gew.-% |
| CoO: | 0,0014 Gew.-% |
vorgesehen sind.

## Claims

1. A bronze-pigmented or grey-pigmented soda-lime silicate glass, more particularly for producing plate glass by the cast method or the float method, the basic composition of the soda-lime silicate glass being:
| | |
|---|---|
| Si0₂: | 66 - 74 % by weight |
| Al₂0₃: | 0 - 3 % by weight |
| Ti0₂: | 0 - 0.15 % by weight |
| Ca0: | 7 - 12 % by weight |
| Mg0: | 2 - 6 % by weight |
| Na₂0: | 10 - 15 % by weight |
| K₂0: | 0 - 3 % by weight |
| Ba0: | 0 - 0.04 % by weight |
| SO₃: | 0.1 - 0.4 % by weight |
with the following pigmenting additives:
| | |
|---|---|
| Fe₂0₃: | 0.14 - 0.45 % by weight |
| Mn0₂: | 0.5 - 2 % by weight |
| NiO: | 0.0 - 0.05 % by weight |
| V₂0₅: | 0.0 - 0.5 % by weight |
| CuO: | 0.0 - 0.1 % by weight |
| CoO: | 0.0 - 0.008 % by weight, |
the total percentages by weight of the constituents of the soda-lime silicate glass being 100.

2. Soda-lime silicate glass according to claim 1, characterised in that the proportion of Fe₂0₃ is in the range from 0.14 to 0.25 % by weight.

3. Soda-lime silicate glass according to claim 1 or 2, characterised in that the proportion of MnO₂ is in the range from 1.0 to 1.7 % by weight.

4. Soda-lime silicate glass according to any of claims 1 to 3, characterised in that the basic composition contains the components:
| | |
|---|---|
| Si0₂: | 71.91 % by weight |
| Al₂0₃: | 0.64 % by weight |
| Ti0₂: | 0.04 % by weight |
| Ca0: | 8.51 % by weight |
| Mg0: | 3.82 % by weight |
| Na₂0: | 13.29 % by weight |
| K₂0: | 0.18 % by weight |
| Ba0: | 0.01 % by weight |
| SO₃: | 0.21 % by weight |
the pigmenting additives being as follows:
| | |
|---|---|
| Fe₂0₃: | 0.14 % by weight |
| Mn0₂: | 1.20 % by weight |
| NiO: | 0.04 % by weight |
| CoO: | 0.002 % by weight. |

5. Soda-lime silicate glass according to any of claims 1 to 3, characterised in that the basic composition contains the constituents:
| | |
|---|---|
| Si0₂: | 71.86 % by weight |
| Al₂0₃: | 0.64 % by weight |
| Ti0₂: | 0.04 % by weight |
| Ca0: | 8.51 % by weight |
| Mg0: | 3.82 % by weight |
| Na₂0: | 13.29 % by weight |
| K₂0: | 0.18 % by weight |
| Ba0: | 0.01 % by weight |
| SO₃: | 0.21 % by weight |
the pigmenting additives being as follows:
| | |
|---|---|
| Fe₂0₃: | 0.14 % by weight |
| Mn0₂: | 1.22 % by weight |
| NiO: | 0.04 % by weight |
| CoO: | 0.04 % by weight. |

6. Soda-lime silicate glass according to any of claims 1 to 3, characterised in that the basic composition is as follows:
| | |
|---|---|
| Si0₂: | 72.26 % by weight |
| Al₂0₃: | 0.64 % by weight |
| Ti0₂: | 0.04 % by weight |
| Ca0: | 8.51 % by weight |
| Mg0: | 3.82 % by weight |
| Na₂0: | 13.29 % by weight |
| K₂0: | 0.18 % by weight |
| Ba0: | 0.01 % by weight |
| SO₃: | 0.21 % by weight |
the pigmenting additives being as follows:
| | |
|---|---|
| Fe₂0₃: | 0.17 % by weight |
| V₂0₅: | 0.2 % by weight |
| MnO₂: | 0.66 % by weight |
| CoO: | 0.0045 % by weight. |

7. Soda-lime silicate glass according to any of claims 1 to 3, characterised in that the basic composition is as follows:
| | |
|---|---|
| Si0₂: | 72.21 % by weight |
| Al₂0₃: | 0.64 % by weight |
| Ti0₂: | 0.04 % by weight |
| Ca0: | 8.51 % by weight |
| Mg0: | 3.82 % by weight |
| Na₂0: | 13.29 % by weight |
| K₂0: | 0.18 % by weight |
| Ba0: | 0.01 % by weight |
| SO₃: | 0.21 % by weight |
the pigmenting additives being as follows:
| | |
|---|---|
| Fe₂0₃: | 0.17 % by weight |
| V₂0₅: | 0.2 % by weight |
| MnO₂: | 0.71 % by weight |
| Co0: | 0.0035 % by weight |

8. Soda-lime silicate glass according to any of claims 1 to 3, characterised in that the basic composition is as follows:
| | |
|---|---|
| Si0₂: | 68.66 % by weight |
| Al₂0₃: | 1.39 % by weight |
| Ti0₂: | 0.06 % by weight |
| Ca0: | 8.09 % by weight |
| Mg0: | 5.01 % by weight |
| Na₂0: | 14.11 % by weight |
| K₂0: | 0.65 % by weight |
| Ba0: | 0.02 % by weight |
| SO₃: | 0.22 % by weight |
the pigmenting additives being as follows:
| | |
|---|---|
| Fe₂0₃: | 0.23 % by weight |
| MnO₂: | 1.52 % by weight |
| Ni0: | 0.033 % by weight |
| Co0: | 0.0022 % by weight |

9. Soda-lime silicate glass according to any of claims 1 to 3, characterised in that the basic composition is as follows:
| | |
|---|---|
| Si0₂: | 68.58 % by weight |
| Al₂0₃: | 1.39 % by weight |
| Ti0₂: | 0.06 % by weight |
| Ca0: | 8.09 % by weight |
| Mg0: | 5.01 % by weight |
| Na₂0: | 14.11 % by weight |
| K₂0: | 0.65 % by weight |
| Ba0: | 0.02 % by weight |
| SO₃: | 0.22 % by weight |
the pigmenting additives being as follows:
| | |
|---|---|
| Fe₂0₃: | 0.23 % by weight |
| MnO₂: | 1.61 % by weight |
| Ni0: | 0.027 % by weight |
| Co0: | 0.0014 % by weight. |

## Revendications

1. Verre de silicate et de soude calcique de couleur bronze ou grise, destiné notamment à la fabrication de verres plats selon le procédé de coulée ou le procédé de flottaison, avec une composition de base du verre de silicate et de soude calcique de
| | |
|---|---|
| SiO₂ : | 66 à 74 % en poids |
| Al₂O₃ : | 0 à 3 % en poids |
| TiO₂ : | 0 à 0,15 % en poids |
| CaO : | 7 à 12 % en poids |
| MgO : | 2 à 6 % en poids |
| Na₂O : | 10 à 15 % en poids |
| K₂O : | 0 à 3 % en poids |
| BaO : | 0 à 0,04 % en poids |
| SO₃ : | 0,1 à 0,4 % en poids |
et des additifs de coloration :
| | |
|---|---|
| Fe₂O₃ : | 0,14 à 0,45 % en poids |
| MnO₂ : | 0,5 à 2 % en poids |
| NiO : | 0,0 à 0,05 % en poids |
| V₂O₅ : | 0,0 à 0,1 % en poids |
| CuO : | 0,0 à 0,1 % en poids |
| CoO : | 0,0 à 0,008 % en poids. |
la somme des pourcentages en poids des composants constituant le verre de silicate et de soude calcique étant égale à 100.

2. Verre de silicate et de soude calcique selon la revendication 1, caractérisé en ce que la teneur en Fe₂O₃ se situe dans la plage de 0,14 à 0,25 % en poids.

3. Verre de silicate et de soude calcique selon la revendication 1 ou 2, caractérisé en ce que la teneur en MnO₂ se situe dans la plage de 1,0 à 1,7 % en poids.

4. Verre de silicate et de soude calcique selon l'une des revendications 1 à 3, caractérisé en ce que la composition de base comporte les proportions
| | |
|---|---|
| SiO₂ : | 71,91 % en poids |
| Al₂O₃ : | 0,64 % en poids |
| TiO₂ : | 0,04 % en poids |
| CaO : | 8,51 % en poids |
| MgO : | 3,82 % en poids |
| Na₂O : | 13,29 % en poids |
| K₂O : | 0,18 % en poids |
| BaO : | 0,01 % en poids |
| SO₃ : | 0,21 % en poids |
et en ce que les additifs de coloration prévus sont
| | |
|---|---|
| Fe₂O₃ : | 0,14 % en poids |
| MnO₂ : | 1,20 % en poids |
| NiO : | 0,04 % en poids |
| CoO : | 0,002 % en poids. |

5. Verre de silicate et de soude calcique selon l'une des revendications 1 à 3, caractérisé en ce que la composition de base comporte les proportions
| | |
|---|---|
| SiO₂ : | 71,86 % en poids |
| Al₂O₃ : | 0,64 % en poids |
| TiO₂ : | 0,04 % en poids |
| CaO : | 8,51 % en poids |
| MgO : | 3,82 % en poids |
| Na₂O : | 13,29 % en poids |
| K₂O : | 0,18 % en poids |
| BaO : | 0,01 % en poids |
| SO₃ : | 0,21 % en poids |
et en ce que les additifs de coloration prévus sont
| | |
|---|---|
| Fe₂O₃ : | 0,14 % en poids |
| MnO₂ : | 1,22 % en poids |
| NiO : | 0,04 % en poids |
| CuO : | 0,04 % en poids. |

6. Verre de silicate et de soude calcique selon l'une des revendications 1 à 3, caractérisé en ce que la composition de base comporte les proportions
| | |
|---|---|
| SiO₂ : | 72,26 % en poids |
| Al₂O₃ : | 0,64 % en poids |
| TiO₂ : | 0,04 % en poids |
| CaO : | 8,51 % en poids |
| MgO : | 3,82 % en poids |
| Na₂O : | 13,29 % en poids |
| K₂O : | 0,18 % en poids |
| BaO : | 0,01 % en poids |
| SO₃ : | 0,21 % en poids |
et en ce que les additifs de coloration prévus sont
| | |
|---|---|
| Fe₂O₃ : | 0,17 % en poids |
| V₂O₅ : | 0,2 % en poids |
| MnO₂ : | 0,66 % en poids |
| CoO : | 0,0045 % en poids. |

7. Verre de silicate et de soude calcique selon l'une des revendications 1 à 3, caractérisé en ce que la composition de base comporte les proportions
| | |
|---|---|
| SiO₂ : | 72,21 % en poids |
| Al₂O₃ : | 0,64 % en poids |
| TiO₂ : | 0,04 % en poids |
| CaO : | 8,51 % en poids |
| MgO : | 3,82 % en poids |
| Na₂O : | 13,29 % en poids |
| K₂O : | 0,18 % en poids |
| BaO : | 0,01 % en poids |
| SO₃ : | 0,21 % en poids |
et en ce que les additifs de coloration prévus sont
| | |
|---|---|
| Fe₂O₃ : | 0,17 % en poids |
| V₂O₅ : | 0,2 % en poids |
| MnO₂ : | 0,71 % en poids |
| CoO : | 0,0035 % en poids. |

8. Verre de silicate et de soude calcique selon l'une des revendications 1 à 3, caractérisé en ce que la composition de base comporte les proportions
| | |
|---|---|
| SiO₂ : | 68,66 % en poids |
| Al₂O₃ : | 1,39 % en poids |
| TiO₂ : | 0,06 % en poids |
| CaO : | 8,09 % en poids |
| MgO : | 5,01 % en poids |
| Na₂O : | 14,11 % en poids |
| K₂O : | 0,65 % en poids |
| BaO : | 0,02 % en poids |
| SO₃ : | 0,22 % en poids |
et en ce que les additifs de coloration prévus sont
| | |
|---|---|
| Fe₂O₃ : | 0,23 % en poids |
| MnO₂ : | 1,52 % en poids |
| NiO : | 0,033 % en poids |
| CoO : | 0,0022 % en poids. |

9. Verre de silicate et de soude calcique selon l'une des revendications 1 à 3, caractérisé en ce que la composition de base comporte les proportions
| | |
|---|---|
| SiO₂ : | 68,58 % en poids |
| Al₂O₃ : | 1,39 % en poids |
| TiO₂ : | 0,06 % en poids |
| CaO : | 8,09 % en poids |
| MgO : | 5,01 % en poids |
| Na₂O : | 14,11 % en poids |
| K₂O : | 0,65 % en poids |
| BaO : | 0,02 % en poids |
| SO₃ : | 0,22 % en poids |
et en ce que les additifs de coloration prévus sont
| | |
|---|---|
| Fe₂O₃ : | 0,23 % en poids |
| MnO₂ : | 1,61 % en poids |
| NiO : | 0,027 % en poids |
| CoO : | 0,0014 % en poids. |
